**Europäisches Patentamt**

**European Patent Office**

**Office européen des brevets**

(19)

(11) Veröffentlichungsnummer: **0 088 222**
**B1**

(12) # EUROPÄISCHE PATENTSCHRIFT

(45) Veröffentlichungstag der Patentschrift:
**08.10.86**

(51) Int. Cl.⁴: **G 01 B 7/02,** G 01 B 7/30,
G 01 D 3/02

(21) Anmeldenummer: **83100744.8**

(22) Anmeldetag: **27.01.83**

(54) **Digitales elektrisches Längen- oder Winkelmesssystem.**

(30) Priorität: **10.03.82 DE 3208591**

(43) Veröffentlichungstag der Anmeldung:
**14.09.83 Patentblatt 83/37**

(45) Bekanntmachung des Hinweises auf die Patenterteilung:
**08.10.86 Patentblatt 86/41**

(84) Benannte Vertragsstaaten:
**AT CH FR GB IT LI NL SE**

(56) Entgegenhaltungen:
**DE - B - 2 457 376**
**DE - B - 2 549 222**
**DE - C - 853 657**
**DE - C - 2 724 858**
**DE - C - 2 820 753**

(73) Patentinhaber: **Dr. Johannes Heidenhain GmbH,
Nansenstrasse 17, D-8225 Traunreut (DE)**

(72) Erfinder: **Burkhardt, Horst, Dr., Fraueneichweg 12,
D-8221 Truchtlaching (DE)**

**Beschreibung**

Die Erfindung betrifft ein digitales elektrisches Längen- oder Winkelmesssystem mit einer Einrichtung zur Fehlerkorrektur gemäss dem Oberbegriff des Anspruchs 1.

Einrichtungen zur Fehlerkorrektur bei Positionsmesssystemen (Längen- oder Winkelmesssystemen) sind bereits bekannt.

In der DE-C-853 657 ist eine optische Messeinrichtung beschrieben, bei der eine Platte im Strahlengang entsprechend dem Fehlerverlauf elektrisch schwenkbar ist.

In der DE-C-2 724 858 ist bei einem Längenmesssystem eine Korrektureinrichtung mit einer Gliederkette beschrieben, deren Glieder gemäss dem Fehlerverlauf quer zur Messrichtung einstellbar sind und die von einem Übertragungselement abgegriffen werden, das eine korrigierende Relativbewegung zwischen einer Abtasteinheit und einem Massstab bewirkt. Die Genauigkeit dieser Fehlerkorrektur ist von der Anzahl der Glieder pro Messlängeneinheit abhängig.

Der DE-C-2 820 753 ist eine Einrichtung zur Fehlerkorrektur bei einem Längenmesssystem zu entnehmen, die, bezüglich der Längenmessung, alle Merkmale des Oberbegriffs des Anspruchs 1 enthält und bei der ein Fehlerkorrekturprofil integrierender Bestandteil eines Trägers für einen Massstab ist und von einem Übertragungselement abgegriffen wird, das eine korrigierende Relativbewegung zwischen einer Abtasteinheit und dem Massstab bewirkt.

Bei den vorgenannten Korrektureinrichtungen unterliegen die Übertragungselemente in Form schwenkbarer Winkelhebel einem mechanischen Verschleiss und bedingen wesentlich grössere Querschnittsabmessungen derartiger Positionsmesssysteme, was einem flexiblen Einsatz der Messysteme abträglich sein kann.

Der Erfindung liegt die Aufgabe zugrunde, bei digitalen elektrischen Messsystemen der eingangs genannten Art eine Einrichtung zur Fehlerkorrektur anzugeben, bei der der Bedarf an mechanischen Elementen reduziert werden kann und die ohne weiteres in handelsübliche Positionsmesssysteme ohne wesentliche bauliche Veränderungen eingebaut werden kann.

Diese Aufgabe wird erfindungsgemäss durch die kennzeichnenden Merkmale des Anspruchs 1 gelöst.

Die mit der Erfindung erzielten Vorteile bestehen insbesondere darin, dass die vorgeschlagene Korrektureinrichtung keiner aufwendigen mechanischen Elemente bedarf, wodurch sich ein einfacher und kostengünstiger Aufbau eines Positionsmesssystems ergibt. Wegen des weitgehenden Fehlens verschleissbehafteter Teile und des geringen Raumbedarfs ist ein betriebssicherer und flexibler Einsatz gewährleistet. Diese Einrichtung erlaubt die Korrektur sowohl linearer als auch nichtlinearer Fehler in Form von Teilungsfehlern und/oder Maschinenfehlern und zusätzlich von Phasenwinkelfehlern unabhängig von der Messlänge.

Weitere vorteilhafte Ausbildungen der Erfindung entnimmt man den abhängigen Ansprüchen.

Ausführungsbeispiele der Erfindung werden anhand der Zeichnung näher erläutert.

Es zeigen

Figur 1 einen Querschnitt eines Längenmesssystems,

Figur 2 ein zweiteiliges Abtastelement mit Verstellelementen,

Figur 3 einen Massstab zur photoelektrischen Korrektur,

Figur 4 einen weiteren Massstab zur photoelektrischen Korrektur und

Figur 5 einen Massstab zur magnetischen Korrektur.

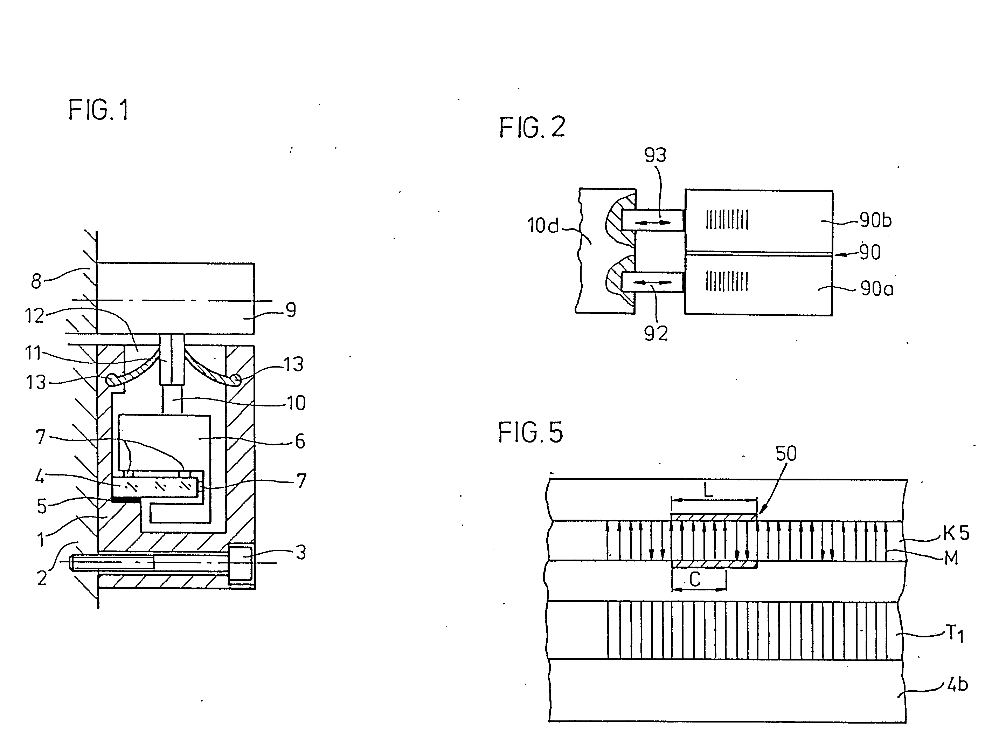

Nach Figur 1 ist ein in einem Querschnitt dargestelltes Längenmesssystem mit einem Gehäuse 1 in Form eines Hohlprofils an einem Bett 2 einer nicht dargestellten Bearbeitungsmaschine mittels einer Schraubverbindung 3 befestigt. An einer Innenfläche des Gehäuses 1 ist ein Massstab 4 mittels einer Klebeschicht 5 angebracht, auf dem an zwei zueinander senkrechten Führungsflächen eine Abtasteinheit 6 mittels Rollen 7 geführt ist, die mit bekannten, nicht dargestellten Mitteln in Form einer Beleuchtungseinrichtung, eines Abtastelements und von Photoelementen die Teilung T des Massstabs 4 abtastet. An einem Schlitten 8 der Bearbeitungsmaschine ist ein Montagefuss 9 mit einem Mitnehmer 10 in beliebiger Weise befestigt, der über eine schwertförmige Verjüngung 11 durch einen Schlitz 12 in das im übrigen vollkommen geschlossene Gehäuse 1 hineinragt, wobei im Schlitz 12 angeordnete elastische Dichtlippen 13 ein Eindringen von Verunreinigungen in das Innere des Gehäuses 1 verhindern. Die Relativbewegung des Schlittens 8 bezüglich des Betts 2 wird vom Mitnehmer 10 auf die Abtasteinheit 6 übertragen, die die bei der Abtastung der Teilung T des Massstabs 4 gewonnenen elektrischen periodischen Analogsignale einer nicht gezeigten Auswerteeinheit zuführt.

In Figur 2 ist ein Abtastelement 90 in Form zweier Abtastplatten 90a, 90b gezeigt, die jeweils von einem in einem Mitnehmer 10d befestigten piezoelektrischen Element 92, 93 beaufschlagt werden. Über nicht gezeigte Leitungen werden den piezoelektrischen Elementen 92, 93 Korrektursignale zur Korrektur der Relativlage zwischen dem Mitnehmer 10d und den Abtastplatten 90a, 90b gemäss einem Fehlerverlauf zugeführt. Die Abtastplatten 90a, 90b besitzen in nicht gezeigter Weise jeweils um 90° versetzte Abtastfelder zur Richtungsdiskriminierung der Messbewegung. Zur Einstellung des 90°-Phasenwinkels können die Abtastplatten 90a, 90b relativ zueinander mittels der piezoelektrischen Elemente 92, 93 verschoben werden. Es können somit Teilungsfehler und/oder Maschinenfehler als auch Phasenwinkelfehler korrigiert werden.

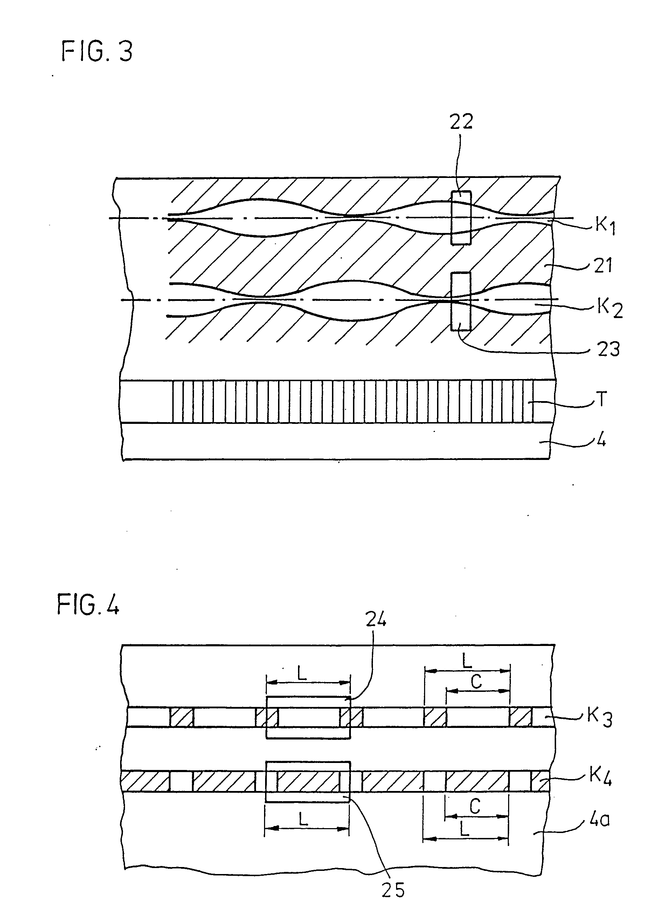

Die elektrischen Korrektursignale werden aus zwei Korrekturspuren $K_1$, $K_2$ neben der Teilung T auf dem transparenten Massstab 4 gemäss Figur 3 gewonnen. Diese transparenten Korrekturspuren $K_1$, $K_2$ in einer lichtundurchlässigen Schicht 21 zur optischen Aufzeichnung einer Korrekturinformation gemäss dem Fehlerverlauf sind in der Breite entsprechend der Korrekturinformation moduliert und werden mittels je eines Photoelements 22, 23 in der Abtasteinheit 6 im Durchlicht abgetastet, deren Ausgangssignale entsprechend verstärkt den piezoelektrischen Elementen 92, 93 als Korrektursignale zugeleitet werden; diese Korrektursignale bewirken Längendilatationen bzw. Längenkontraktionen der piezoelektrischen Elemente 92, 93 in Messrichtung zur Korrektur der Relativlage zwischen den Abtastplatten 90a, 90b und dem Mitnehmer 10d entsprechend dem Fehlerverlauf. Die Korrekturspuren $K_1$, $K_2$ sind als Gegentaktspuren ausgebildet, da die Korrektursignale sowohl positive als auch negative Vorzeichen haben können.

In Figur 4 sind auf einem transparenten Massstab 4a zwei Korrekturspuren $K_3$, $K_4$ neben einer nicht dargestellten Teilung zur optischen Aufzeichnung einer Korrekturinformation gemäss einem Fehlerverlauf gezeigt, die von zwei im Gegentakt geschalteten Photoelementen 24, 25 in einer Abtasteinheit abgetastet werden; die Photoelemente 24, 25 oder die entsprechenden Abtastfelder besitzen die Länge L. Die Korrekturspuren $K_3$, $K_4$ besitzen ebenfalls die Periodenlänge L, wobei jede Periode aus einem durchsichtigen und aus einem undurchsichtigen Feld besteht. Bei der Korrekturspur $K_4$ besitzt das undurchsichtige (gestrichelte) Feld die Länge C und das durchsichtige Feld die Länge L-C; bei der Korrekturspur $K_3$ besitzt das durchsichtige Feld die Länge C und das undurchsichtige (gestrichelte) Feld die Länge L-C. Die in Differenz geschalteten Photoelemente 24, 25 liefern demnach bei der Abtastung der Korrekturspuren $K_3$, $K_4$ das Ausgangssignal $U = U_o$ (2C-L), das vom Tastverhältnis C/L abhängt und bei konstantem Verhältnis C/L unabhängig von der Bewegung der Photoelemente 24, 25 ist. Dieses Ausgangssignal kann ebenfalls entsprechend verstärkt als Korrektursignal den piezoelektrischen Elementen 92, 93 zur Korrektur der Relativlage zwischen den Abtastplatten 90a, 90b und dem Mitnehmer 10d entsprechend dem Fehlerverlauf zugeführt werden.

In Figur 5 ist auf einem Massstab 4b neben einer Teilung $T_1$ eine magnetisierbare Korrekturspur $K_5$ zur magnetischen Aufzeichnung einer Korrekturinformation gemäss einem Fehlerverlauf dargestellt, die von einem Hallelement 50 in einer Abtasteinheit abgetastet wird. Diese Korrekturspur $K_5$ ist innerhalb von Perioden mit einer Periodenlänge L nach einem bestimmten Muster einmal positiv bis zur Sättigung und einmal negativ bis zur Sättigung magnetisiert; die Pfeile in der Korrekturspur $K_5$ stellen die Magnetisierungsvektoren M dar. Da das Hallelement 50 ebenfalls die Länge L aufweist, erscheint am Ausgang des Hallelements 50 die Hallspannung $U_H = B_o C - B_o(L-C) = B_o$ (2C-L) als Mittelwert der beiden magnetischen Induktionen $\pm B_o$ innerhalb einer Periode. Wegen der Übereinstimmung der Länge L des Hallelements 50 mit der Periodizität L der Magnetisierung M ändert sich die vom Hallelement 50 abgegebene Hallspannung $U_H$ nicht, wenn das Hallelement 50 bewegt wird und das Tastverhältnis C/L konstant ist; eine Änderung des Tastverhältnisses C/L innerhalb der Periode L bewirkt eine Änderung der Hallspannung $U_H$. Diese Hallspannung $U_H$ kann ebenfalls entsprechend verstärkt als Korrektursignal den piezoelektrischen Elementen 92, 93 zur Korrektur der Relativlage zwischen den Abtastplatten 90a, 90b und dem Mitnehmer 10d entsprechend einem Fehlerverlauf zugeführt werden.

Entsprechende Korrektursignale können auch aus Korrekturspuren mit induktiver oder kapazitiver Aufzeichnung von Korrekturinformationen gewonnen werden.

Die Gewinnung von Korrektursignalen ist auch aus mechanischen Korrekturspuren in Form von Fehlerkorrekturprofilen möglich, die beispielsweise durch elektromechanische Elemente in Form von piezoelektrischen Elementen oder magnetostriktiven Elementen oder durch mechanische Fühler abgetastet werden, die elektrische Elemente beispielsweise in Form eines Potentiometers beaufschlagen; die Ausgangssignale dieser Elemente werden wiederum entsprechend verstärkt Verstellelementen zwischen den Abtastplatten und dem Mitnehmer zugeleitet.

Die in beliebiger Weise gewonnenen Korrektursignale können auch in einem Analogspeicher oder einem Digitalspeicher des Messsystems abgespeichert sein. Die Korrekturinformationen können beispielsweise mittels eines Laserinterferometers bei der Vermessung des Positionsmesssystems in der Gebrauchslage an der Maschine gewonnen werden.

Die Verstellelemente 92, 93 können auch durch magnetostriktive Elemente oder durch elektromagnetische Elemente in Form einer elektrischen Spule mit einem längsverschiebbaren Kern gebildet sein.

Die Erfindung ist nicht auf lichtelektrische Messsysteme beschränkt, sondern auch bei optischen, magnetischen, induktiven oder kapazitiven Messsystemen einsetzbar.

**Patentansprüche**

1. Digitales elektrisches Längen- oder Winkelmesssystem mit einer Einrichtung zur Fehlerkorrektur sowie mit einer Messteilung (4) und mit einer diese Messteilung (4) abtastenden Abtasteinheit (6) an zwei relativ zueinander verschiebbaren Objekten (2, 8), wobei die Abtasteinheit (6) ein Abtastelement (90) mit einer Abtastteilung aufweist und mit dem zu messenden Objekt (8) entweder direkt oder über einen Mitnehmer (10, 10d) verbunden ist, dadurch gekennzeichnet, dass das Abtastelement (90) aus zwei relativ zueinander in Messrichtung verschiebbaren Abtastplatten (90a, 90b) besteht, von denen jede als Abtastteilung ein Abtastfeld aufweist, das zu dem Abtastfeld der anderen Abtastplatte derart versetzt angeordnet ist, dass diese Abtastfelder zwei elektrische, periodische, um einen 90°-Phasenwinkel zueinander versetzte Analogsignale erzeugen, und dass zwischen jeder Abtastplatte (90a, 90b) und dem Mitnehmer (10d) oder dem Objekt (8) jeweils ein elektrisches oder elektromechanisches Verstellelement (92, 93) angeordnet ist, die infolge einer Beaufschlagung mit elektrischen Korrektursignalen einmal die Relativlage zwischen jeder Abtastplatte (90a, 90b) und dem Mitnehmer (10d) oder dem Objekt (8) in Messrichtung entsprechend dem Verlauf von Teilungsfehlern und/oder Maschinenfehlern und zum anderen die Relativlage zwischen den beiden Abtastplatten (90a, 90b) in Messrichtung entsprechend dem Verlauf von Phasenwinkelfehlern infolge von Abweichungen vom 90°-Phasenwinkel korrigieren.

2. Messsystem nach Anspruch 1, dadurch gekennzeichnet, dass das Verstellelement (92, 93) durch ein piezoelektrisches Element, ein magnetostriktives Element oder durch ein elektromagnetisches Element in Form einer elektrischen Spule mit einem längsverschiebbaren Kern gebildet ist.

3. Einrichtung nach Anspruch 1, dadurch gekennzeichnet, dass die Korrektursignale durch Abtastung von Korrekturinformationen aufweisenden Korrekturspuren ($K_1$, $K_2$; $K_3$, $K_4$; $K_5$) gewonnen werden, die der Messteilung ($T$; $T_1$) zugeordnet sind.

4. Einrichtung nach Anspruch 3, dadurch gekennzeichnet, dass die Korrekturinformationen auf den Korrekturspuren ($K_1$, $K_2$; $K_3$, $K_4$; $K_5$) optisch, magnetisch, induktiv, kapazitiv oder mechanisch aufgezeichnet sind.

5. Einrichtung nach Anspruch 1, dadurch gekennzeichnet, dass die Korrektursignale in analoger oder digitaler Form abgespeichert sind.

6. Einrichtung nach Anspruch 3, dadurch gekennzeichnet, dass die Korrekturspuren ($K_1$, $K_2$; $K_3$, $K_4$) amplitudenmoduliert oder pulsbreitenmoduliert sind.

## Claims

1. Digital electric length or angle measuring system comprising a device for error correction and comprising a measuring graduation (4) and a scanning unit (6), which scans this measuring graduation (4), at two objects (2, 8) which can be displaced relative to each other, in which arrangement the scanning unit (6) is provided with a scanning element (90) having a scanning graduation and is connected to the object to be measured (8) either directly or via a carrier (10, 10d), characterized in that the scanning element (90) consists of two scanning plates (90a, 90b) which can be displaced relative to each other in the measuring direction and each of which is provided, as a scanning graduation, with a scanning field which is arranged to be offset with respect to the scanning field of the other scanning plate in such a manner that these scanning fields generate two electric periodic analog signals which are offset by a phase angle of 90° with respect to each other, and that between each scanning plate (90a, 90b) and the carrier (10d) or the object (8) in each case an electric or electromechanical adjusting element (92, 93) is arranged which, due to having electric correction signals applied to them, correct, on the one hand, the relative position between each scanning plate (90a, 90b) and the carrier (10d) or the object (8) in the measuring direction in accordance with the variation of graduation errors and/or machine errors and, on the other hand, correct the relative position between the two scanning plates (90a, 90b) in the measuring direction in accordance with the variation of phase angle errors due to deviations from the 90° phase angle.

2. Measuring system according to Claim 1, characterized in that the adjusting element (92, 93) is formed by a piezoelectric element, a magnetostrictive element or by an electromagnetic element in the form of an electric coil having a longitudinally displaceable core.

3. Device according to Claim 1, characterized in that the correction signals are obtained by scanning correction tracks ($K_1$, $K_2$; $K_3$, $K_4$; $K_5$) which are provided with correction information items and which are associated with the measuring graduation ($T$; $T_1$).

4. Device according to Claim 3, characterized in that the correction information items on the correction tracks ($K_1$, $K_2$; $K_3$, $K_4$; $K_5$) are optically, magnetically, inductively, capacitively or mechanically recorded.

5. Device according to Claim 1, characterized in that the correction signals are stored in analog or digital form.

6. Device according to Claim 3, characterized in that the correction tracks ($K_1$, $K_2$; $K_3$, $K_4$) are amplitude modulated or pulse-width modulated.

## Revendications

1. Système électrique numérique de mesure des longueurs ou des angles comprenant un dispositif pour la correction des erreurs ainsi qu'une graduation (4) et une unité de balayage (6) balayant cette graduation (4) sur deux objets (2, 8) déplaçables l'un par rapport à l'autre, l'unité de balayage (6) comportant un élément de balayage (90) muni d'une graduation et étant raccordée à l'objet à mesurer (8) soit directement soit par l'intermédiaire d'un entraîneur (10, 10d), caractérisé par le fait que l'élément de balayage (90) est constitué de deux plaques de balayage (90a, 90b) déplaçables l'une par rapport à l'autre dans le sens de la mesure et dont chacune comprend, en tant que graduation, un champ de balayage qui est disposé décalé par rapport au champ de balayage de l'autre plaque de manière que ces champs de balayage produisent deux signaux analogiques électriques et périodiques décalés d'un angle de phase de 90° l'un par rapport à l'autre, et qu'entre chaque plaque de balayage (90a, 90b) et l'entraîneur (10d) ou l'objet (8) sont respectivement disposés des éléments de réglage électriques ou électromécaniques (92, 93) qui, au reçu de signaux de correction électriques, corrigent, d'une part, la position relative entre chaque plaque de balayage (90a, 90b) et l'entraîneur (10d) ou l'objet (8) dans le sens de la mesure conformément au tracé des erreurs de graduation et/ou des erreurs mécaniques et, d'autre part, la position relative entre les deux plaques de balayage (90a, 90b) dans le sens de la mesure conformément au tracé des erreurs d'angles de phase par suite des écarts de l'angle de phase de 90°.

2. Système de mesure selon la revendication 1, caractérisé par le fait que l'élément de réglage (92, 93) est formé par un élément piézo-électrique, un élément magnétostrictif ou par un élément électromagnétique sous la forme d'une bobine électrique comportant un noyau déplaçable longitudinalement.

3. Dispositif selon la revendication 1, caractérisé par le fait que les signaux de correction sont obtenus par balayage de pistes de correction ($K_1$, $K_2$; $K_3$, $K_4$; $K_5$) comportant des informations de correction et associés à la graduation (T; $T_1$).

4. Dispositif selon la revendication 3, caractérisé par le fait que les informations de correction sont enregistrées sur les pistes de correction ($K_1$, $K_2$; $K_3$, $K_4$; $K_5$) par voie optique, magnétique, inductive, capacitive ou mécanique.

5. Dispositif selon la revendication 1, caractérisé par le fait que les signaux de correction sont mémorisés sous forme analogique ou numérique.

6. Dispositif selon la revendication 3, caractérisé par le fait que les pistes de correction ($K_1$, $K_2$; $K_3$, $K_4$) sont modulées en amplitude ou en largeur d'impulsion.

FIG.1

FIG.2

FIG.5

0 088 222

# FIG. 3

# FIG. 4